# EUROPEAN PATENT APPLICATION

(11) **EP 4 379 534 A1**
(43) Date of publication of application: **05.06.2024**
(21) Application number: 23855872.0
(22) Date of filing: 13.10.2023
(51) Int. Cl.: G06F 3/16, G06T 19/00, H04W 4/80, G06F 3/0484, G06F 3/14, G06F 3/01

(54) **ELECTRONIC DEVICE FOR CONTROLLING DISPLAY OF VIRTUAL DEVICE, METHOD THEREFOR, AND NON-TRANSITORY COMPUTER-READABLE STORAGE MEDIUM THEREFOR**

(30) Priority: 17.10.2022 KR 20220133621; 22.11.2022 KR 20220157820
(71) Applicant: Samsung Electronics Co., Ltd., Suwon-si, Gyeonggi-do 16677 (KR)
(72) Inventor: HONG, Minho, Suwon-si Gyeonggi-do 16677 (KR); SONG, Gajin, Suwon-si Gyeonggi-do 16677 (KR); SHIN, Saejung, Suwon-si Gyeonggi-do 16677 (KR); SHIN, Hoseon, Suwon-si Gyeonggi-do 16677 (KR)
(74) Representative: HGF
(86) International application number: PCT/KR2023/015887
(87) International publication number: WO 2024/085550

(57) **Abstract**

An electronic device is provided. The electronic device includes a microphone. The electronic device includes a communication circuit. The electronic device includes a processor. The processor is configured to identify a voice command indicating display through a display of a virtual device registered using a software application for controlling another device through the electronic device, based on a recognition of a voice signal obtained through the microphone. The processor is configured to identify, based on the voice command, whether a mixed reality (MR) device configured to display the virtual device is worn. The processor is configured to obtain, in response to identifying that the MR device is worn, an image to be displayed on the display of the virtual device displayed through the MR device, based on device information registered using the software application as associated with the virtual device. The processor is configured to transmit, through the communication circuit to the MR device, a signal for displaying the image on the display of the virtual device displayed through the MR device.

## Description

### [Technical Field]

The disclosure relates to an electronic device, a method, and a non-transitory computer readable storage medium for control of a display of a virtual device.

### [Background Art]

An electronic device that provides augmented reality (AR) service, mixed reality (MR) service, or extended reality (XR) service for displaying information generated by a computer, as associated with a real object in the real-world or a visual object corresponding to the real object are being developed to provide an enhanced user experience. The electronic device may be a wearable device that may be worn by a user. For example, the electronic device may be an AR glass or a visual see-through (VST) device.

### [Disclosure]

### [Technical Solution]

An electronic device is provided. The electronic device may include a microphone. The electronic device may include a communication circuit. The electronic device may include a processor. The processor may be configured to identify a voice command that indicates display through a display of a virtual device registered by using a software application for controlling another device through the electronic device, based on a recognition of a voice signal obtained through the microphone. The processor may be configured to identify, based on the voice command, whether a mixed reality (MR) device for displaying the virtual device is worn. The processor may be configured to obtain, in response to identifying that the MR device is worn, an image to be displayed on the display of the virtual device that is displayed through the MR device, based on device information registered by using the software application as associated with the virtual device. The processor may be configured to transmit, through the communication circuit to the MR device, a signal for displaying the image on the display of the virtual device displayed through the MR device.

A method is provided. The method may be executed in an electronic device including a microphone and a communication circuit. The method may comprise identifying a voice command that indicates display through a display of a virtual device registered by using a software application for controlling another device through the electronic device, based on a recognition of a voice signal obtained through the microphone. The method may comprise identifying, based on the voice command, whether a mixed reality (MR) device for displaying the virtual device is worn. The method may comprise obtaining, in response to identifying that the MR device is worn, an image to be displayed on the display of the virtual device that is displayed through the MR device, based on device information registered by using the software application as associated with the virtual device. The method may comprise transmitting, through the communication circuit to the MR device, a signal for displaying the image on the display of the virtual device displayed through the MR device.

A non-transitory computer readable storage medium is provided. The non-transitory computer-readable storage medium may store one or more programs. The one or more programs may comprise instructions which, when executed by a processor of an electronic device including a microphone and a communication circuit, cause the electronic device to identify a voice command that indicates display through a display of a virtual device registered by using a software application for controlling another device through the electronic device, based on a recognition of a voice signal obtained through the microphone. The one or more programs may comprise instructions which, when executed by the processor, cause the electronic device to identify, based on the voice command, whether a mixed reality (MR) device for displaying the virtual device is worn. The one or more programs may comprise instructions which, when executed by the processor, cause the electronic device to obtain, in response to identifying that the MR device is worn, an image to be displayed on the display of the virtual device that is displayed through the MR device, based on device information registered by using the software application as associated with the virtual device. The one or more programs may comprise instructions which, when executed by the processor, cause the electronic device to transmit, through the communication circuit to the MR device, a signal for displaying the image on the display of the virtual device displayed through the MR device.

### [Description of the Drawings]

The above and other aspects, features and advantages of certain embodiments of the present disclosure will be more apparent from the following detailed description, taken in conjunction with the accompanying drawings, in which:
FIG. 1 illustrates an example of an environment including an exemplary electronic device and a mixed reality (MR) device.
FIG. 2 is a simplified block diagram of an exemplary electronic device.
FIG. 3 is a flowchart illustrating an exemplary method of registering a virtual device.
FIG. 4A illustrates an exemplary method of registering a virtual device by using a software application for controlling another device.
FIG. 4B illustrates an example of a user interface including a visual object corresponding to a virtual device registered by using a software application for controlling another device.
FIG. 5 is a flowchart illustrating an exemplary method of displaying an image through a display of a virtual device.
FIG. 6 is a flowchart illustrating an exemplary method of identifying a voice command based on a display position.
FIG. 7 is a flowchart illustrating an exemplary method of obtaining an image to be displayed through a display of a virtual device based on information obtained from another electronic device.
FIG. 8 is a flowchart illustrating an exemplary method of identifying a voice command based on a position of an electronic device, a position of another electronic device, and a position of a virtual device.
FIG. 9 is a flowchart illustrating an exemplary method of obtaining an image based on device information of a virtual device transmitted to an external electronic device.
FIG. 10 is a flowchart illustrating an exemplary method of identifying a voice command based on a direction of a display of another electronic device and a direction of a display of a virtual device.
FIG. 11 is a flowchart illustrating an exemplary method of controlling a virtual device located in a virtual space.
FIG. 12 is a flowchart illustrating an exemplary method of registering another virtual device based on another voice command.
FIG. 13 illustrates an example of functional components executed by a processor of an MR device.
FIG. 14 is a block diagram of an electronic device in a network environment according to various embodiments.

### [Mode for Invention]

Hereinafter, embodiments of the present disclosure will be described in detail with reference to the drawings so that those of ordinary skill in the technical field to which the present disclosure pertains may easily implement the present disclosure. However, the present disclosure may be implemented in several different forms and is not limited to the embodiments described herein. With respect to description of the drawings, the same or similar reference numerals may be used for the same or similar components. In addition, in drawings and related descriptions, descriptions of well-known functions and configurations may be omitted for clarity and brevity.

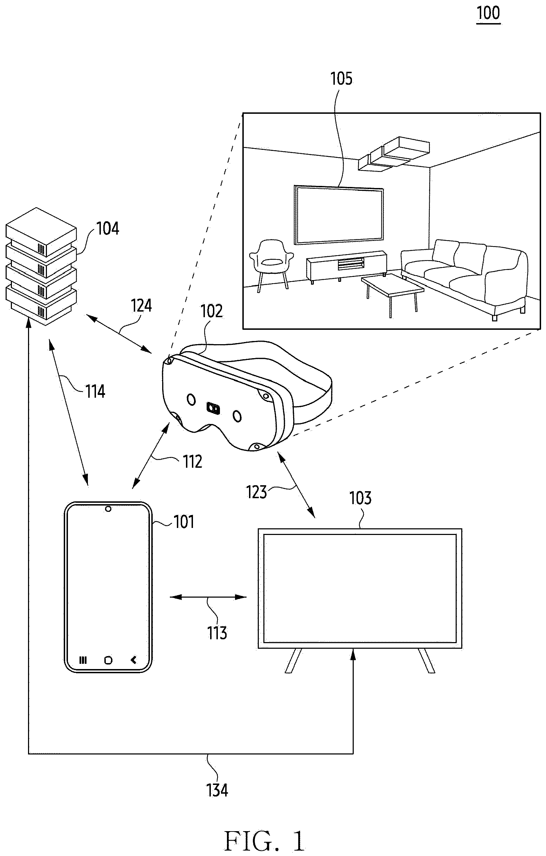

FIG. 1 illustrates an example of an environment including an exemplary electronic device and a mixed reality (MR) device.

Referring to FIG. 1, the environment 100 may include the electronic device 101, an MR device 102 (or an extended reality (XR) device 102), another electronic device 103, and an external electronic device 104.

For example, the electronic device 101 may store a software applications for controlling or managing another device through the electronic device 101. For example, the electronic device 101 may control or manage a real device (or physical device) such as the MR device 102 and the other electronic devices 103 and a virtual device related to the MR devices 102, using the software application. For example, the electronic device 101 may control the other device by executing the software application, based on the user input received for the user interface of the software application. For example, the software application may be used to register the other device based on the user input received while the user interface is displayed. For example, the software application may be used to change a state of the other device based on the user input received while the user interface is displayed. For example, the user input may include a touch input for the user interface displayed on a display of the electronic device 101 and a voice signal obtained through a microphone of the electronic device 101 while the user interface is displayed. For example, the voice signal may be recognized for functions provided through the software application while the user interface is focused. For example, that the user interface is focused may indicate that a pointer (or cursor) is positioned with respect to the user interface. For example, that the user interface is focused may indicate that the user interface is in a state capable of receiving an input (or user input). However, it is not limited thereto.

For example, the MR device 102 may include a device for providing augmented reality (AR) service, mixed reality (MR) service, or extended reality (XR) service. For example, the MR device 102 may include a display for providing the AR service, the MR service, or the XR service. For example, when the MR device 102 is an AR glass, the display of the MR device 102 may be transparent. For example, when the MR device 102 is a video see-through(or visual-through) (VST) device, the display of the MR device 102 may be opaque.

For example, the MR device 102 may provide the AR service, the MR service, or the XR service, by displaying a real environment around the MR device 102 or an image representing the real environment, along with a virtual object, on the display of the MR device 102. For example, when the MR device 102 is an AR glass, the MR device 102 may display the virtual object in the real environment shown through the display of the MR device 102. For example, when the MR device 102 is a VST device, the MR device 102 may display the virtual object on the image obtained through a camera of the MR device 102. For example, the virtual object may be recognized by a user wearing the MR device 102 as a real object existing in a real environment. For example, the virtual object may include a virtual device 105. For example, the virtual device 105 may include a display. For example, the virtual device 105 may display an image on the display of the virtual device 105, such as a real device including a display. For example, since the MR device 102 displays the virtual device 105, the MR device 102 may display the image on the display of the virtual device 105. For example, the image may be displayed on the display of the virtual device 105, based on data received from the electronic device 101 to the MR device 102 through a connection 112. For example, the connection 112 between the electronic device 101 and the MR device 102 may include directly connecting the electronic device 101 to the MR device 102 and/or connecting the electronic device 101 to the MR device 102 through at least one intermediate node. For example, the image may be displayed on the display of the virtual device 105, based on data received from another electronic device 103 to the MR device 102 through the connection 123. For example, the connection 123 between the MR device 102 and another electronic device 103 may include directly connecting the MR device 102 to the other electronic device 103 and/or connecting the MR device 102 to the other electronic device 103 through at least one intermediate node. For example, the image may be displayed on the display of the virtual device 105, based on data received from the other electronic device 103 to the MR device 102 through the electronic device 101 using the connection 112 and the connection 113. For example, the connection 113 between the electronic device 101 and the other electronic device 103 may include directly connecting the electronic device 101 to the other electronic device 103 and/or connecting the electronic device 101 to the other electronic device 103 through at least one intermediate node.

For example, the software application may be used for the display of the image on the display of the virtual device 105. For example, a user input for the display of the image on the display of the virtual device 105 may be received through the software application. For example, the software application may be executed by the electronic device 101, the MR device 102, and/or the other electronic device 103.

For example, the other electronic device 103 may be a device that provides data for displaying an image on the display of the virtual device 105. For example, the software application may be used to provide the data. For example, a user input for providing the data may be received through the software application. For example, the software application may be executed by the electronic device 101, the MR device 102, and/or the other electronic device 103.

For example, an external electronic device 104 may include a device that provides a service for managing or controlling the electronic device 101, the MR device 102, and/or the other electronic device 103 within the external electronic device 104 using the software application, and may be a server. For example, the external electronic devices 104 may support at least a part of operations of the electronic devices 101, the MR device 102, and/or the other electronic device 103 for displaying an image on the display of the virtual device 105 through the software application. For example, at least a part of the support may be executed through a connection 114, a connection 124, and/or a connection 134. For example, the connection 114 between the electronic device 101 and the external electronic device 104 may include directly connecting the electronic device 101 to the external electronic device 104 and/or connecting the electronic device 101 to the external electronic device 104 through at least one intermediate node. For example, the connection 124 between the MR device 102 and the external electronic device 104 may include directly connecting the MR device 102 to the external electronic device 104 and/or connecting the MR device 102 to the external electronic device 104 through at least one intermediate node. However, it is not limited thereto.

The following descriptions may provide various example operations for displaying an image on the display of the virtual device 105 displayed on the display of the MR device 102 through the electronic device 101, the MR device 102, the other electronic device 103, and/or the external electronic device 104 within environment 100.

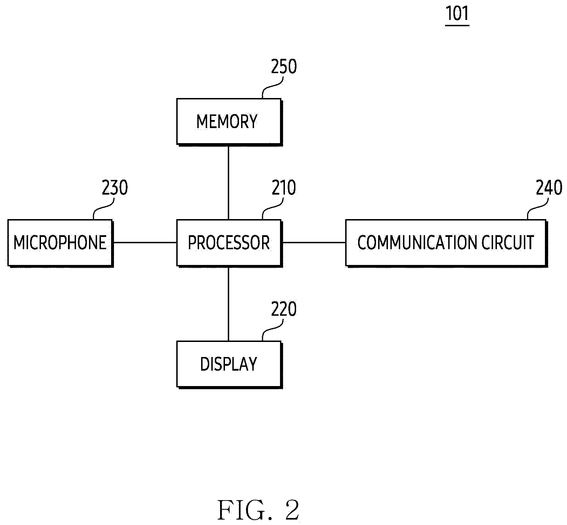

FIG. 2 is a simplified block diagram of an exemplary electronic device. The electronic device may be the electronic device 101 of FIG. 1.

Referring to FIG. 2, the electronic device 101 may include a processor (e.g., including processing circuitry) 210, a display 220, a microphone 230, a communication circuit 240, and a memory 250.

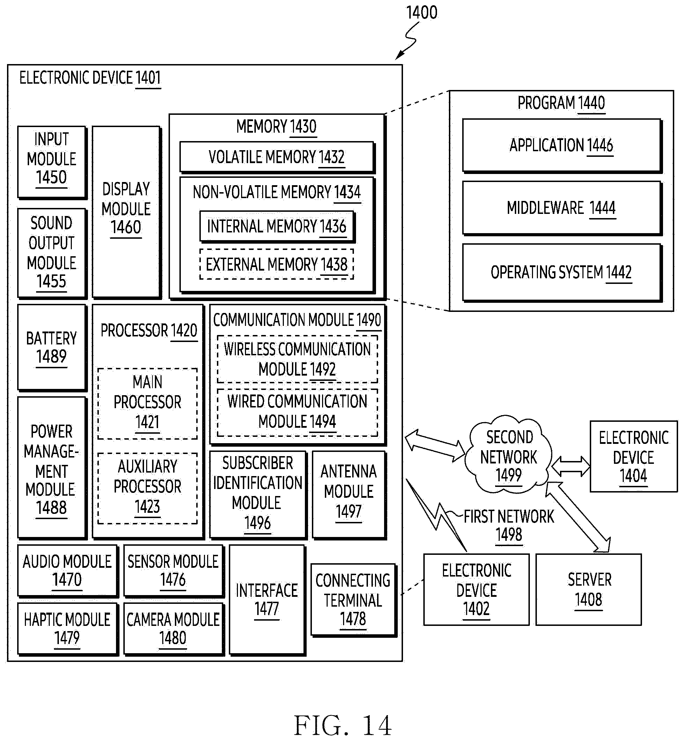

For example, the processor 210 may include various processing circuitry including, for example, at least a part of a processor 1420 of FIG. 14. For example, the display 220 may include at least a part of a display module 1460 of FIG. 14. For example, the microphone 230 may include at least a part of an input module 1450 of FIG. 14. For example, the communication circuit 240 may include at least a part of a communication module 1490 (or at least a part of a wireless communication module 1492) of FIG. 14. For example, the memory 250 may include at least a part of a memory 1430 of FIG. 14.

For example, the processor 210 may be operably coupled with each of the display 220, the microphone 230, the communication circuit 240, and the memory 250. For example, the processor 210 being operably coupled with each of the display 220, the microphone 230, the communication circuit 240, and the memory 250 may indicate that the processor 210 is directly connected with each of the display 220, the microphone 230, the communication circuit 240, and the memory 250. For example, the processor 210 being operably coupled with each of the display 220, the microphone 230, the communication circuit 240, and the memory 250 may indicate that the processor 210 is connected with each of the display 220, the microphone 230, the communication circuit 240, and the memory 250 through another component of the electronic device 101. For example, the processor 210 being operably coupled with each of the display 220, the microphone 230, the communication circuit 240, and the memory 250 may indicate that each of the display 220, the microphone 230, the communication circuit 240, and the memory 250 operates based on instructions executed by the processor 210. For example, the processor 210 being operably coupled with each of the display 220, the microphone 230, the communication circuit 240, and the memory 250 may indicate that each of the display 220, the microphone 230, the communication circuit 240, and the memory 250 is controlled by the processor 210. However, it is not limited thereto.

For example, the processor 210 may be configured to execute at least a part of operations to be illustrated below.

For example, the components illustrated in FIG. 2 may be included in the MR device 102.

In the following examples, when the MR device 102 displays an image through the display of the virtual device 105 without the assistance of the electronic device 101, at least a part of operations of the electronic device 101 may be replaced with operations of the MR device 102. In this case, operations of the electronic device 101 and the MR device 102 executed based on a communication between the electronic device 101 and the MR device 102 may be omitted. In this case, operations of the electronic device 101 executed based on a communication between the electronic device 101 and the other electronic device 103 may be replaced with operations of the MR device 102 executed based on a communication between the MR device 102 and the other electronic device 103. In this case, operations of the electronic device 101 executed based on a communication between the electronic device 101 and the external electronic device 104 may be replaced with operations of the MR device 102 executed based on a communication between the MR device 102 and the external electronic device 104.

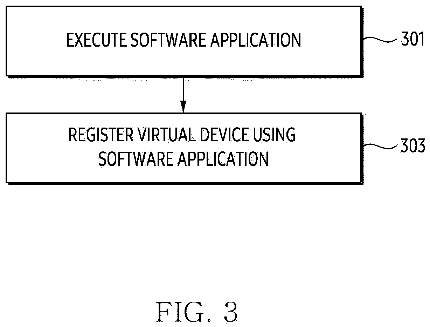

FIG. 3 is a flowchart illustrating an exemplary method of registering a virtual device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

Referring to FIG. 3, in operation 301, the processor 210 may execute a software application for managing or controlling another device through the electronic device 101. For example, the software application may be executed in a foreground state that displays a user interface of the software application on a display (e.g., the display 220 in FIG. 2). For example, the software application may be executed in a background state in which the user interface is not displayed on the display 220. For example, a state of the software application may be changed from the foreground state to the background state, or from the background state to the foreground state.

In operation 303, the processor 210 may register a virtual device (e.g., the virtual device 105 of FIG. 1) using the software application. For example, the virtual device 105 may be a device included in a virtual space or a space for MR. For example, the virtual device 105 may be displayed on the display of a MR device (e.g., the MR device 102 of FIG. 1) accessible to the virtual space or the space for the MR. For example, the registration of the virtual device 105 may be executed, on a conditions that a device (e.g., the MR device 102 of FIG. 1) accessible to the virtual space or the space for the MR is registered. However, it is not limited thereto.

For example, the processor 210 may register device information of the virtual device 105 and information on the position of the virtual device 105, as associated with the virtual device 105 registered using the software application. For example, the device information and the information on the position of the virtual device 105 may be inputted based on a touch input received through the user interface or based on a voice signal obtained through the microphone 230, while registering the virtual device 105 using the software application.

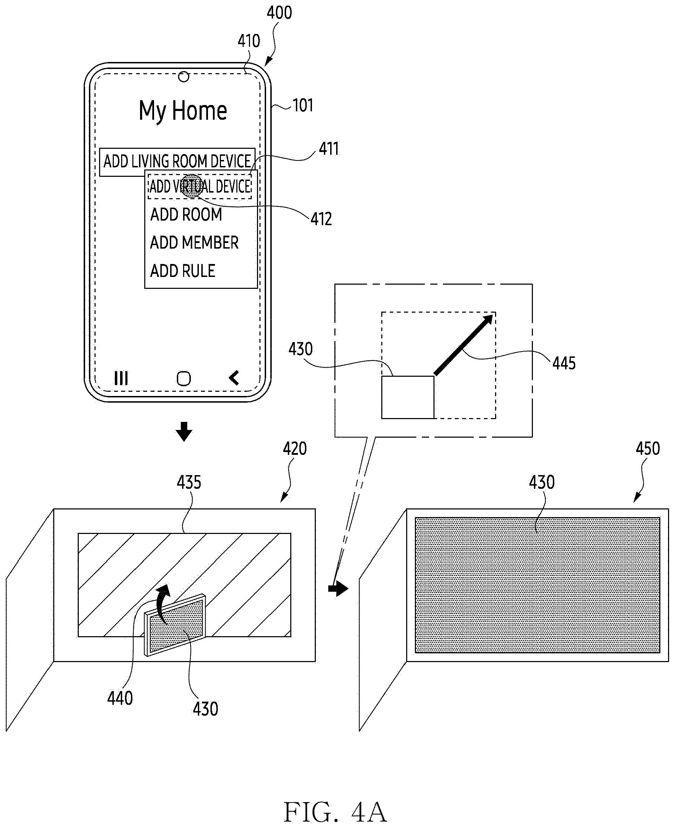

The virtual device 105 that is registered using the software application as associated with the device information and the information on the position of the virtual device 105 may be illustrated in FIG. 4A.

FIG. 4A illustrates an exemplary method of registering a virtual device by using a software application for controlling another device.

Referring to FIG. 4A, as in a state 400, a processor (e.g., the processor 210 of FIG. 2) may display a user interface 410 of the software application. For example, the user interface 410 may include an executable object 411 for registering a virtual device (e.g., the virtual device 105 of FIG. 1) using the software application. For example, the processor 210 may receive a touch input 412 for the executable object 411. For example, the processor 210 may identify whether a MR device (e.g., the MR device 102 of FIG. 1) is worn in response to the touch input 412.

For example, the processor 210 may identify whether the MR device 102 is worn based on a signal indicating a state of the MR device 102 received from the MR device 102. For example, the signal may include information indicating a movement of the MR device 102 or a change in the movement, obtained through a sensor of the MR device 102. For example, the signal may include information indicating whether the MR device 102 is adjacent to an external object (e.g., a part of the user's body (e.g., a head)) or information indicating a distance between the MR device 102 and the external object, obtained through the sensor of the MR device 102. For example, the processor 210 may identify that the MR device 102 is worn or that the MR device 102 is not worn based on the signal.

For example, the processor 210 may request the signal from the MR device 102 on a condition that the signal indicating the state of the MR device 102 is not received from the MR device 102. For example, the MR device 102 may receive the request of the signal. In response to the request, the MR device 102 may obtain the signal based on data obtained through the sensor of the MR device 102. The MR device 102 may transmit the signal to an electronic device (e.g., the electronic device 101 of FIG. 1). The processor 210 may identify that the MR device 102 is worn or that the MR device 102 is not worn, based on the signal received from the MR device 102.

For example, in response to identifying that the MR device 102 is worn, the processor 210 may transmit a signal for registration of the virtual device 105 to the MR device 102. For example, the signal for the registration may be transmitted to identify device information and a position of the virtual device 105 using the MR device 102. For example, the MR device 102 may receive the signal for the registration from the electronic device 101.

For example, as in a state 420, in response to the signal for the registration, the MR device 102 may display a visual object 430 representing the virtual device 105 to be registered through the software application along with an environment around the MR device 102, or on an image representing the environment around the MR device 102. For example, the visual object 430 may be moved based on a user input (e.g., a gaze input, a gesture input through a movement of the controller connected to the MR device 102, and/or a voice input) identified by the MR device 102. For example, a size of the visual object 430 may be changed based on a user input (e.g., a gaze input, a gesture input through a movement of the controller connected to the MR device 102, and/or a voice input) identified by the MR device 102. For example, a shape of the visual object 430 may be changed based on a user input (e.g., a gaze input, a gesture input through a movement of the controller connected to the MR device 102, and/or a voice input) identified by the MR device 102.

For example, in the state 420, the MR device 102 may receive a user input 440 indicating that the visual object 430 is moved to a region 435, and a user input 445 indicating that the size of the visual object 430 is increased. For example, the MR device 102 may change the state 420 to the state 450 based on the user input 440 and the user input 445.

For example, in the state 450, the MR device 102 may display the visual object 430 having a size identified based on the user input 445 in a position identified based on the user input 440. For example, the MR device 102 may receive device information of the MR device 102 and a user input (e.g., a gaze input, a gesture input through a movement of the controller connected to the MR device 102, and/or a voice input) indicating that a position of the MR device 102 is determined, while the visual object 430 is displayed. For example, in response to the user input, the MR device 102 may obtain first information indicating a position of the visual object 430 as a position of the virtual device 105 and second information indicating a size of the visual object 430 as a size of the virtual device 105. For example, the MR device 102 may transmit the first information and the second information to the electronic device 101. For example, the processor 210 may receive the first information and the second information from the MR device 102.

For example, the processor 210 may register the virtual device 105 based at least partially on receiving the first information and the second information. For example, the processor 210 may transmit information for registering the virtual device 105 to an external electronic device (e.g., the external electronic device 104 of FIG. 1). For example, the virtual device 105 may be registered in the external electronic device 104 based on the information. For example, the virtual device 105 registered in the external electronic device 104 may be associated with a position of the virtual device 105 and device information of the virtual device 105.

For example, the processor 210 may identify the authority for access to the virtual device 105 after the registration of the virtual device 105 is completed or after the first information and the second information are received. For example, the processor 210 may associate the virtual device 105 with information on another user account using the software application, based on a user input indicating that access to the virtual device 105 through the other user account (e.g., a user account of a family member) distinct from a user account used within the electronic device 101 is authorized. For example, the processor 210 may transmit a signal indicating to associate the other user account with the virtual device 105 to the external electronic device 104.

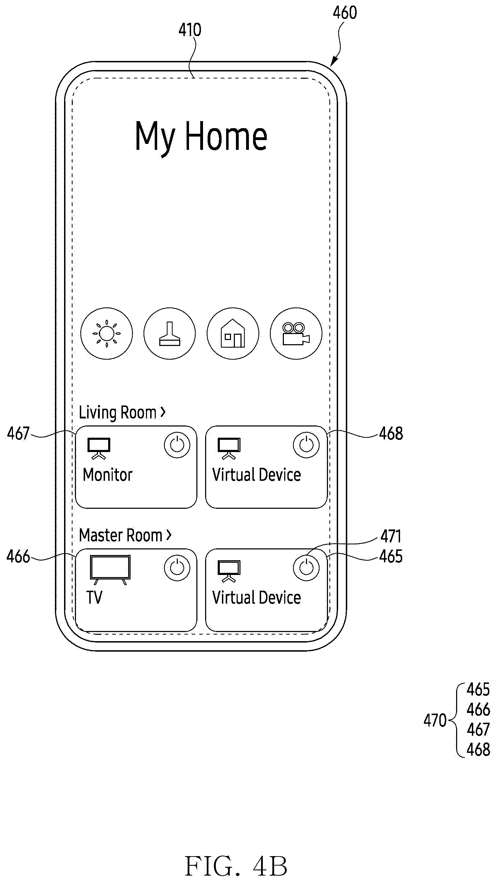

For example, the processor 210 may display an executable object corresponding to the virtual device 105 within the user interface 410 after the registration of the virtual device 105 is completed. The executable object within the user interface 410 may be illustrated through FIG. 4B.

FIG. 4B illustrates an example of a user interface including a visual object corresponding to a virtual device registered by using a software application for controlling another device.

Referring to FIG. 4B, as in a state 460, the user interface 410 may include executable objects 470. For example, the executable objects 470 may include an executable object 465 corresponding to the virtual device 105. For example, the executable objects 470 may include an executable objects 466 corresponding to another electronic device 103 that is a real device, an executable objects 467 corresponding to a real device, and an executable object 468 corresponding to another virtual device. For example, in the user interface 410, the executable objects 470 may be categorized. For example, the executable objects 470 may be categorized based on a position, as shown in FIG. 4B. For example, in the user interface 410, the executable object 465 and the executable object 466 may indicate that the virtual device 105 and the other electronic device 103 are positioned within a master room, and the executable object 467 and the executable object 468 may indicate that the real device corresponding to the executable object 467 and the other virtual device corresponding to the executable object 468 are positioned within a living room.

For example, each of the executable objects 470 may include a quick access element for controlling a device corresponding to each of the executable objects 470. For example, the executable object 465 may include a quick access element 471. Although not illustrated in FIG. 4B, the processor 210 may display a user interface 410 including a plurality of executable objects for controlling or managing a device corresponding to each of the executable objects 470, in response to a touch input on another region of each of the executable objects 470 distinct from a region of the quick access element. Although not illustrated in FIG. 4B, the processor 210 may control each of the executable objects 470 based on a function corresponding to the quick access element, in response to a touch input on the region of the quick access element.

Referring back to FIG. 4A, the processor 210 may provide a notification or alarm for informing or guiding the MR device 102 to be worn, in response to identifying that MR device 102 is not worn. For example, the notification or the alarm may be provided from the electronic device 101 or from the MR device 102. For example, when the notification or the alarm is provided from the electronic device 101, the notification or the alarm may be displayed through the display 220, output through the speaker of the electronic device 101, or output through the actuator of the electronic device 101 as vibration. For example, when the notification or the alarm is provided from the MR device 102, the notification or the alarm may be output through the speaker of the MR device 102. However, it is not limited thereto.

For example, the processor 210 may register the virtual device 105 based on the user input received through the user interface 410 in response to identifying that the MR device 102 is not worn. For example, the registration of the virtual device 105 through the electronic device 101 may be at least partially different from the registration of the virtual device 105 through the MR device 102.

Although not illustrated in FIG. 4A, the processor 210 may register the virtual device 105 by identifying a user input for inputting text (or character) indicating the device information and the position of the virtual device 105 through the user interface 410.

For example, information (e.g., information of a real product) of a real device may be used for the registration of the virtual device 105. For example, the processor 210 may identify device information of the virtual device 105 based on the information on the real device, by identifying a user input for inputting information on a real device that has a type corresponding to the type of the virtual device 105. The processor 210 may register the virtual device 105 based on the identification.

As described above, the electronic device 101 may register the virtual device 105 displayed on the display of the MR device 102 using the software application. For example, the registration of the virtual device 105 initiated from the electronic device 101 may be partially processed by the MR device 102. For example, the electronic device 101 may perform registration of virtual device 105, based on user experience that may be provided through MR device 102 and user experience that may be provided through the electronic device 101.

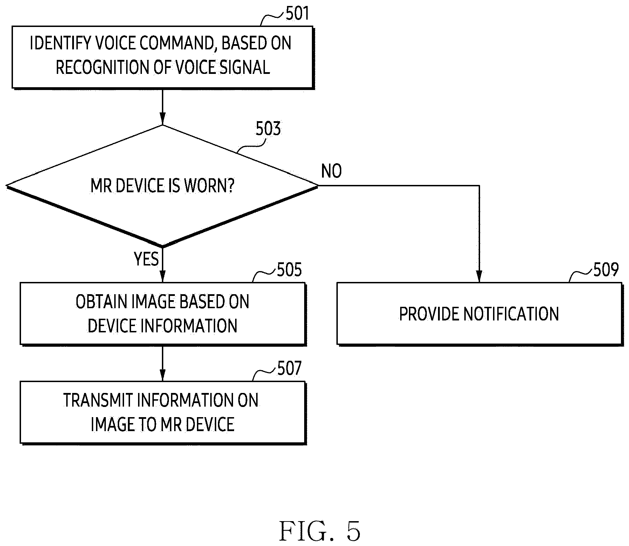

FIG. 5 is a flowchart illustrating an exemplary method of displaying an image through a display of a virtual device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

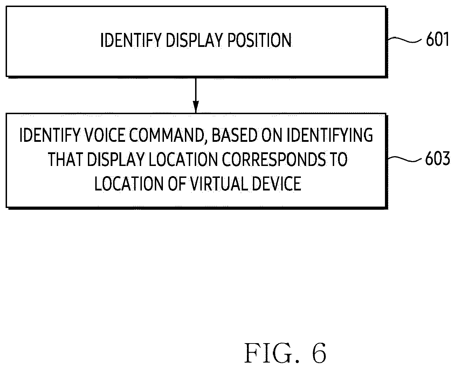

Referring to FIG. 5, in operation 501, the processor 210 of FIG. 2 may identify a voice command indicating a display through a display of a virtual device (e.g., the virtual device 105 of FIG. 1) registered using the software application to control another device through the electronic device 101, based on recognition of the voice signal obtained through a microphone (e.g., the microphone 230 of FIG. 2). For example, the voice command may indicate directly (or explicitly) or indirectly (or implicitly) that the display is executed through the display of the virtual device 105. Identifying the voice command based on the recognition of the voice signal will be illustrated through FIGS. 6, 7, 8, and 10.

In operation 503, the processor 210 may identify whether an MR device (e.g., the MR device 102 of FIG. 1) for displaying the virtual device 105 is worn based on the voice command.

For example, since the voice command indicates the display through the display of the virtual device 105 displayable through the MR device 102, the processor 210 may identify whether the MR device 102 is worn in response to the voice command.

For example, the processor 210 may receive a signal indicating a state of the MR device 102 through a communication circuit (e.g., the communication circuit 240 of FIG. 2) from the MR device 102 connected to the electronic device 101. For example, the processor 210 may identify whether the MR device 102 is worn based on the signal. For example, the signal indicating the state of the MR device 102 may include information indicating a movement (and/or posture) of the MR device 102, obtained through a sensor (e.g., acceleration sensor and/or gyro sensor) of the MR device 102. For example, the signal indicating the state of the MR device 102 may include information indicating a distance between the MR device 102 and an external obj ect or information indicating whether the external object is adjacent to the MR device 102, obtained through a sensor (e.g., a proximity sensor and/or UWB communication circuit) of the MR device 102.

For example, the processor 210 may execute operation 505 based on identifying that the MR device 102 is worn, and may execute operation 509 based on identifying that the MR device 102 is not worn.

In operation 505, on a condition that the MR device 102 is worn, the processor 210 may obtain an image to be displayed on the display of the virtual device 105 displayed through the MR device 102 based on device information registered using the software application, as associated with the virtual device 105. For example, the processor 210 may execute operation 505 based on the device information, in order to obtain an image suitable for the display of the virtual device 105.

For example, the device information may be received from an external electronic device (e.g., the external electronic device 104 of FIG. 1). For example, the processor 210 may request the external electronic device 104 to transmit the device information of the virtual device 105 in response to identifying that the MR device 102 is worn. The external electronic device 104 may transmit the device information to the electronic device 101 in response to the request. The electronic device 101 may obtain the image based on the device information.

For example, the device information may be stored in the electronic device 101 as associated with the virtual device 105. For example, the processor 210 may obtain the device information by identifying information associated with the virtual device 105, in response to identifying that the MR device 102 is worn. For example, the processor 210 may obtain the image based on the device information.

For example, the device information registered as associated with the virtual device 105 through the description of FIGS. 3 to 4B may include data on the size of the display of the virtual device 105 and/or data on the aspect ratio of the display of the virtual device 105.

In operation 507, the processor 210 may transmit a signal for displaying the image on the display of the virtual device 105 displayed through the MR device 102 to the MR device 102 through the communication circuit 240. For example, the signal may cause the MR device 102 to display the image on the display of the virtual device 105 displayed through the display of the MR device 102. For example, the virtual device 105 located in the virtual space provided through the MR device 102 or the space for the MR may display the image on the display of the virtual device 105. For example, the display may be controlled by the MR device 102 based on the signal.

For example, the image may include a static image, a dynamic image, an execution screen of a software application, a wallpaper, and a lock screen.

In operation 509, the processor 210 may provide a notification informing that the MR device 102 is to be worn, on a condition that the MR device 102 is not worn.

For example, the notification may be provided through a component of the electronic device 101. For example, the notification may be displayed through a display (e.g., the display 220 of FIG. 2) of the electronic device 101. For example, the notification may be output through a speaker of the electronic device 101. For example, the notification may be output as vibration through an actuator of the electronic device 101. However, it is not limited thereto.

For example, the notification may be provided through a component of the MR device 102. For example, the notification may be output through a speaker of the MR device 102. However, it is not limited thereto.

As described above, the electronic device 101 may extract the voice command indicating the virtual device 105 from the voice signal received through a microphone (e.g., the microphone 230 of FIG. 2), and identify a state of the MR device 102 to control the virtual device 105 based on the extracted voice command. For example, the electronic device 101 may communicate with the MR device 102 to control the virtual device 105 through the MR device 102, based on identifying that the MR device 102 is a state available for control of the virtual device 105. For example, the electronic device 101 may add a service provided through the MR device 102 to a service provided through the electronic device 101, based on these communications. For example, the electronic device 101 may provide an enhanced service or an enhanced user experience.

FIG. 6 is a flowchart illustrating an exemplary method of identifying a voice command based on a display position. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

Operation 601 and operation 603 of FIG. 6 may be included in operation 501 of FIG. 5. However, it is not limited thereto. For example, operation 601 and operation 603 may be independent of operation 501 of FIG. 5.

Referring to FIG. 6, in operation 601, the processor 210 of FIG. 2 may identify a display position based on the recognition of the voice signal obtained through a microphone (e.g., the microphone 230 of FIG. 2). For example, the processor 210 may obtain the voice signal corresponding to "Display in the master room" through the microphone 230. For example, the processor 210 may identify the display position indicated by the voice signal as a "master room" based on the recognition of the voice signal.

In operation 603, the processor 210 may identify the voice command, based on identifying that the display position corresponds to a position of the virtual device 105 registered using the software application as associated with a virtual device (e.g., the virtual device 105 of FIG. 1). For example, the processor 210 may identify a position of each of devices registered using the software application based on the display position. For example, as a result of the identification, the processor 210 may identify the voice command indicating the display through the display of the virtual device 105 from at least a part of the voice signal, by identifying that a position of the virtual device 105 corresponds to the display position.

As described above, even when the voice signal does not include a portion indicating the virtual device 105, the electronic device 101 may identify at least part of the voice signal as the voice command indicating the display through the display of the virtual device 105, using a position associated with each of devices registered using the software application.

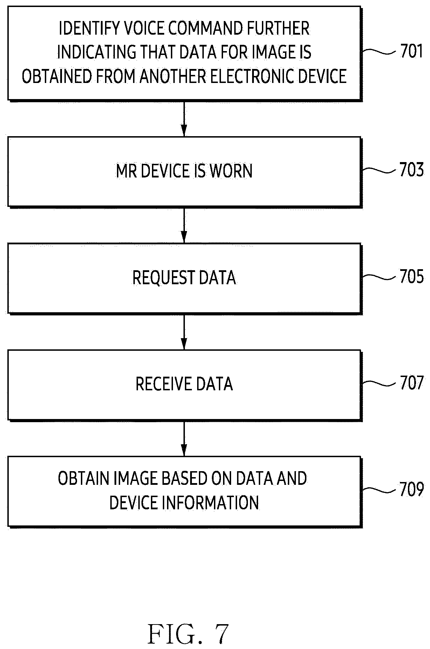

FIG. 7 is a flowchart illustrating an exemplary method of obtaining an image to be displayed through a display of a virtual device based on information obtained from another electronic device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

At least a part of operations 701 to 709 of FIG. 7 may be related to at least a part of operation 501 of FIG. 5, operation 503 of FIG. 5, operation 505 of FIG. 5, operation 601 of FIG. 6, and operation 603 of FIG. 6.

Referring to FIG. 7, in operation 701, the processor 210 of FIG. 2 may identify the voice command further indicating that data for an image to be displayed on the display of a virtual device (e.g., the virtual device 105 of FIG. 1) is obtained from another electronic device (e.g., another electronic device 103 of FIG. 1), based on the recognition of the voice signal obtained through a microphone (e.g., the microphone 230 of FIG. 2).

For example, the processor 210 may obtain the voice signal corresponding to "Display a screen of the living room TV in the master room" through the microphone 230. For example, the processor 210 may identify that the data for the image to be displayed on the display of the virtual device 105 is obtained from the other electronic device 103 corresponding to "living room TV", based on the recognition of the voice signal.

In operation 703, the processor 210 may identify that a MR device (e.g., the MR device 102 of FIG. 1) is worn. For example, in operation 701, the processor 210 may identify whether the MR device 102 is worn in response to identifying the voice command. For example, the processor 210 may identify that the MR device 102 is worn based on a signal received from the MR device 102.

In operation 705, the processor 210 may request the data from the other electronic device 103 through the communication circuit 240, based on the identified voice command, in response to identifying that the MR device 102 is worn. For example, the processor 210 may transmit the request based on information to access the other electronic device 103 registered using the software application. The other electronic device 103 may receive the request.

In operation 707, the processor 210 may receive the data for the image from the other electronic device 103.

In operation 709, the processor 210 may obtain the image to be displayed on a display of the virtual device 105, based on the data and the device information of the virtual device 105.

For example, the image may correspond to another image displayed through a display of the other electronic device 103. For example, an image displayed on the display of the other electronic device 103 may be mirrored on the display of the virtual device 105. For example, the image may be a mirroring image for the other image. For example, the content represented by the image may be substantially the same as the content represented by the other image. For example, arrangement of visual objects in the image may be the same as or different from arrangement of visual objects in the other image. For example, when a size of the display of the virtual device 105 is different from a size of the display of the other electronic device 103, or an aspect ratio of the display of the virtual device 105 is different from an aspect ratio of the display of the other electronic device 103, the arrangement of visual objects in the image may be different from the arrangement of visual objects in the other image. However, it is not limited thereto.

For example, the image may be an image extending from another image displayed through the display of the other electronic device 103. For example, the image and the other image may provide a single screen. For example, the image may represent a part of the single screen, and the other image may represent another part of the single screen.

As described above, the electronic device 101 may obtain or convert an image provided from the other electronic device 103, and provide the image to the MR device 102 for a display on the display of the virtual device 105. For example, the electronic device 101 may display an image from the other electronic devices 103 on the display of the virtual device 105 displayed through the MR device 102, through these operations. For example, the electronic device 101 may deliver a service provided through the other electronic device 103 to the MR device 102, using the software application. For example, since an ability of the MR device 102 is different from an ability of other electronic devices 103, the electronic device 101 may provide a service expanding the ability of the other electronic devices 103.

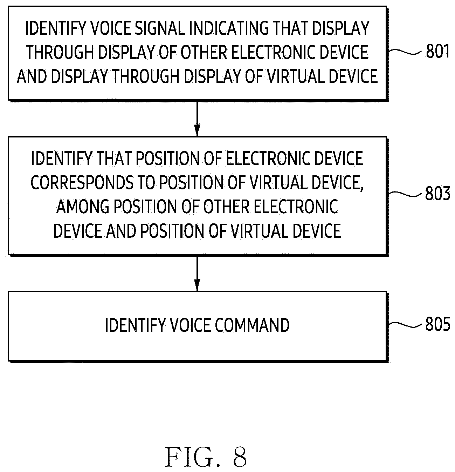

FIG. 8 is a flowchart illustrating an exemplary method of identifying a voice command based on a position of an electronic device, a position of another electronic device, and a position of a virtual device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

Operations 801 to 805 of FIG. 8 may be included in operation 501 of FIG. 5. However, it is not limited thereto. For example, operations 801 to 805 may be independent of operation 501 of FIG. 5.

Referring to FIG. 8, in operation 801, the processor 210 of FIG. 2 may identify that the voice signal indicates a display through a display of the other electronic device 103 registered using the software application and a display through the display of a virtual device (e.g., the virtual device 105 of FIG. 1), based on the recognition of the voice signal obtained through a microphone (e.g., the microphone 230 of FIG. 2). For example, the processor 210 may obtain the voice signal corresponding to "Turn on the TV" through the microphone 230. For example, the processor 210 may identify "TV" indicated by the voice signal based on the recognition of the voice signal, using the software application. For example, the processor 210 may identify that the voice signal indicates a display through the display of the other electronic device 103 and a display through the display of the virtual device 105, by identifying that the TV registered using the software application is another electronic device (e.g., the other electronic devices 103 of FIG. 1) and the virtual devices 105.

In operation 803, the processor 210 may identify that a position of the electronic device 101 corresponds to a position of the virtual device 105 among a positions of the other electronic device 103 and the position of the virtual device 105. For example, in response to the identification, the processor 210 may identify a position of the electronic device 101 using a communication circuit (e.g., the communication circuit 240 of FIG. 2). For example, in response to the identification, the processor 210 may identify a position of the other electronic device 103 registered using the software application. For example, in response to the identification, the processor 210 may identify a position of the virtual device 105 registered using the software application. For example, the processor 210 may identify that the position of the electronic device 101 corresponds to the position of the virtual device 105 among the position of the other electronic device 103 and the position of the virtual device 105.

In operation 805, the processor 210 may identify the voice command indicating the display through the display of the virtual device 105, based on identifying that the position of the electronic device 101 corresponds to the position of the virtual device 105. For example, since a probability that information on a position of the service is included in a voice signal from the user may be reduced when the user's intention is to receive service in own position, the processor 210 may identify the voice command based on identifying that the position corresponds to the position of the virtual device 105.

As described above, even when the voice signal does not include a portion indicating the virtual device 105, the electronic device 101 may identify at least part of the voice signal as the voice command indicating the display through the display of the virtual device 105, using a position associated with each of devices registered using the software application.

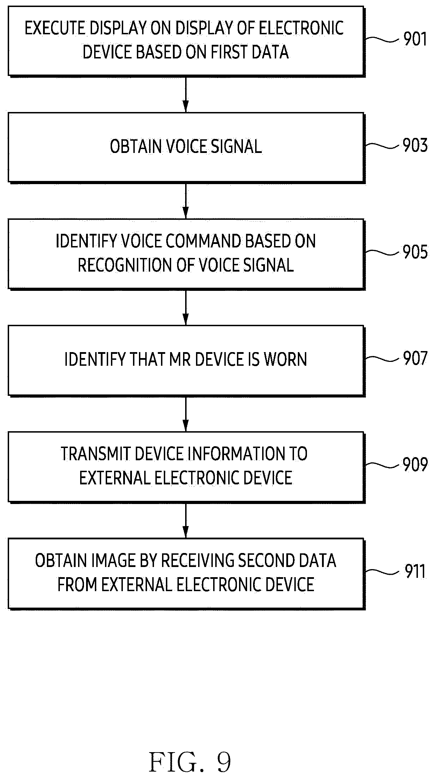

FIG. 9 is a flowchart illustrating an exemplary method of obtaining an image based on device information of a virtual device transmitted to an external electronic device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

At least a part of operations 901 to 911 of FIG. 9 may be related to at least a part of operations 501, 503, and 505 of FIG. 5.

Referring to FIG. 9, in operation 901, the processor 210 of FIG. 2 may execute a display on a display (e.g., the display 220 of FIG. 2) of the electronic device 101 based on first data. For example, another image corresponding to an image to be obtained in operation 911 may be displayed on the display 220. For example, the first data may be data for displaying the other image. For example, the first data may be received from an external electronic device (e.g., a server providing streaming services) through a communication circuit (e.g., the communication circuit 240 of FIG. 2).

In operation 903, the processor 210 may obtain a voice signal through a microphone (e.g., the microphone 230 in FIG. 2) while the other image is displayed on the display 220.

In operation 905, the processor 210 may identify a voice command indicating a display on the display of a virtual device (e.g., the virtual device 105 of FIG. 1), based on recognition of the voice signal. For example, operation 905 may correspond to operation 501 of FIG. 5.

In operation 907, the processor 210 may identify that an MR device (e.g., the MR device 102 of FIG. 1) is worn, in response to the identification of the voice command. For example, operation 907 may correspond to a part of operation 503 of FIG. 5.

In operation 909, the processor 210 may transmit device information of the virtual device 105 to the external electronic device through a communication circuit (e.g., the communication circuit 240 of FIG. 2), in response to identifying that the MR device 102 is worn. For example, the processor 210 may transmit the device information to provide content provided from the external electronic device on the display of the virtual device 105. For example, the processor 210 may transmit the device information so that the external electronic device sets an image to be displayed on the display of the virtual device 105.

For example, the virtual device 105 may not be recognized or identified by the external electronic device. For example, the virtual device 105 may be transparent to the external electronic device. However, it is not limited thereto. For example, the processor 210 may transmit the identification information of the virtual device 105 to the external electronic device along with the device information so that the external electronic device may recognize or identify the virtual device 105.

In operation 911, the processor 210 may obtain the image by receiving second data obtained based on the device information through the communication circuit 240 from the external electronic device. For example, the image may correspond to the other image. For example, a content provided through the image may correspond to a content provided through the other image. For example, an arrangement of visual objects in the image may be the same as or different from an arrangement of visual objects in the other image. For example, when a size of the display of the virtual device 105 is different from a size of the display 220 or an aspect ratio of the display of the virtual device 105 is different from an aspect ratio of the display 220, an arrangement of visual objects in the image may be different from an arrangement of visual objects in the other image. However, it is not limited thereto.

As described above, the electronic device 101 may display a content from the external electronic device connected to the electronic device 101 on the display of the virtual device 105. For example, the electronic device 101 may reduce the amount of resources consumed to obtain an image to be displayed on the display of the virtual device 105, by requesting the configuration of an image to be displayed on the display of the virtual device 105 to the external electronic device. For example, the resources may indicate calculations performed for the image to be displayed on the display of the virtual device 105. However, it is not limited thereto.

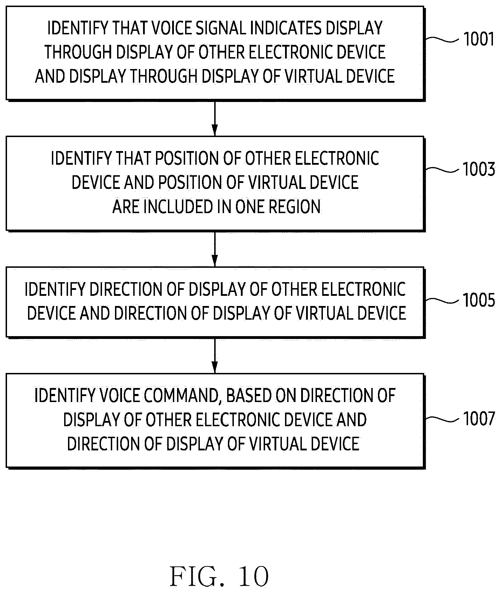

FIG. 10 is a flowchart illustrating an exemplary method of identifying a voice command based on a direction of a display of another electronic device and a direction of a display of a virtual device. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

At least a part of operations 1001 to 1007 of FIG. 10 may be included in operation 501 of FIG. 5. However, it is not limited thereto. For example, operations 1001 to 1007 may be independent of operation 501 of FIG. 5.

Referring to FIG. 10, in operation 1001, the processor 210 of FIG. 2 may identify that a voice signal obtained through a microphone (e.g., the microphone 230 of FIG. 2) indicates a display through a display of another electronic device (e.g., another electronic device 103 of FIG. 1) and a display through a display of a virtual device (e.g., the virtual device 105 of FIG. 1). For example, the other electronic device 103 may be a real device registered using the software application. For example, the voice signal may correspond to "Turn on the TV." For example, the processor 210 may identify the other electronic devices 103 and the virtual devices 105 that is a device including a display among devices registered through the software application, based on identifying that the voice signal indicates "TV". For example, the processor 210 may identify that the voice signal indicates the display through the display of the other electronic device 103 and the display through the display of the virtual device 105.

In operation 1003, the processor 210 can identify that a position of the other electronic device 103 and a position of the virtual device 105 are included in one region. For example, the processor 210 may identify a position of the other electronic device 103 registered using the software application, as associated with the other electronic device 103. For example, the processor 210 may identify a position of the virtual device 105 registered using the software application as associated with the virtual device 105. For example, the processor 210 may identify that the position of the other electronic device 103 and the position of the virtual device 105 are positioned in one region (e.g., "master room").

In operation 1005, the processor 210 may identify a direction of the display of the other electronic device 103 and a direction of the display of the virtual device 105. For example, the fact that other electronic device 103 and the virtual device 105 are within a single region indicates that a device corresponding to user intent cannot be identified among the other electronic device 103 and the virtual device 105 based on position, the processor 210 may identify a direction of the display of the other electronic device 103 and a direction of the display of the virtual device 105. For example, the processor 210 may identify the direction of the display of the other electronic device 103 and the direction of the display of the virtual device 105, based on a position of the other electronic device 103 within the single region and a position of the virtual device 105 within the single region.

In operation 1007, the processor 210 may identify the voice command indicating a display on the display of the virtual device 105, based on the direction of the display of the other electronic device 103 and the direction of the display of the virtual device 105. For example, the processor 210 may identify a position of the electronic device 101 within the single region, using a communication circuit (e.g., the communication circuit 240 of FIG. 2). For example, the processor 210 may identify the voice command, based on the position of the electronic device 101, the direction of the display of the other electronic device 103, and the direction of the display of the virtual device 105. For example, processor 210 may identify the voice command, by identifying that the electronic device 101 is positioned in front of the display of the virtual device 105 among the display of the other electronic device 103 and the display of the virtual device 105, based on the position of the electronic device 101, the direction of the display of the other electronic device 103, and the direction of the display of the virtual device 105.

FIG. 10 illustrates an example of identifying one device based on a direction of a display when the voice signal indicates two or more devices, but this is for convenience of explanation. The electronic device 101 may identify one device among two or more devices based on various other criteria as well as the direction of the display.

For example, the processor 210 may identify device information of the other electronic devices 103 and device information of the virtual devices 105 based on identifying the other electronic devices 103 and the virtual devices 105 from the voice signal.

For example, the processor 210 may identify a size of the display of the other electronic device 103 from the device information of the other electronic device 103, and may identify a size of the display of the virtual device 105 from the device information of the virtual device 105. For example, the processor 210 may compare the size of the display of the other electronic device 103 with the size of the display of the virtual device 105. For example, the processor 210 may identify the voice command indicating the display through the display of the virtual device 105 based on the size of the display of the virtual device 105 larger than the size of the display of the other electronic device 103. However, it is not limited thereto.

For example, the processor 210 may identify resolution of the display of the other electronic device 103 from the device information of the other electronic device 103, and may identify resolution of the display of the virtual device 105 from the device information of the virtual device 105. For example, the processor 210 may compare the resolution of the display of the other electronic device 103 with the resolution of the display of the virtual device 105. For example, the processor 210 may identify the voice command indicating the display through the display of the virtual device 105, based on the resolution of the display of the virtual device 105 higher than the resolution of the display of the other electronic device 103. However, it is not limited thereto.

For example, the processor 210 may identify mobility of the other electronic device 103 from the device information of the other electronic device 103 and identify mobility of the virtual device 105 from the device information of the virtual device 105. For example, the processor 210 may further identify a movement of the electronic device 101 based on identifying the other electronic device 103 and the virtual device 105. For example, the movement may be identified through a sensor of the electronic device 101. For example, the processor 210 may identify the mobility of the virtual device 105 higher than the mobility of the other electronic device 103, and identify the voice command indicating the display through the display of the virtual device 105 based on identifying that the electronic device 101 is moving. However, it is not limited thereto.

As described above, even when the voice signal received through the microphone 230 does not explicitly indicate the virtual device 105, the electronic device 101 may identify at least part of the voice signal as the voice command indicating the display through the display of the virtual device 105, based on the device information of the other electronic device 103 and the device information of the virtual device 105.

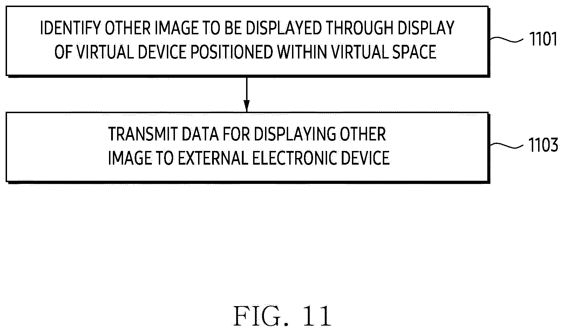

FIG. 11 is a flowchart illustrating an exemplary method of controlling a virtual device located in a virtual space. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

In operation 1101, the processor 210 of FIG. 2 may identify another image to be displayed through a display of a virtual device (e.g., the virtual device 105 of FIG. 1) positioned within a virtual space accessible using the MR device 102, while a connection with the MR device (e.g., the MR device 102 of FIG. 1) is released, using the software application.

For example, the virtual space may be a space distinct from a space for MR. For example, unlike the space for the MR that is activated when accessing using the MR device 102, the virtual space may be maintained and activated even when the virtual space is not accessed using the MR device 102.

For example, the other image may be provided to the software application from another software application distinct from the software application. For example, the other software application may be a software application for managing an image that is obtained through a camera of the electronic device 101 or received to the electronic device 101. For example, the other software application may be a software application for managing or displaying a web page including the other image. However, it is not limited thereto.

In operation 1103, the processor 210 may transmit data for displaying the other image on the display of the virtual device 105 to an external electronic device providing the virtual space through a communication circuit (e.g., the communication circuit 240 of FIG. 2), while the connection with the MR device 102 is released. For example, operation 1103 may be executed using the software application. For example, even when the virtual space is not accessed using the MR device 102, the processor 210 may transmit the data using the software application to set an image displayed through the display of the virtual device 105 in the virtual space.

As described above, the electronic device 101 may control the virtual device 105 positioned in the virtual space accessible through the MR device 102 among the electronic device 101 and the MR device 102, while the connection with the MR device 102 is released. The electronic device 101 may expand a usability of the virtual space by providing such a service.

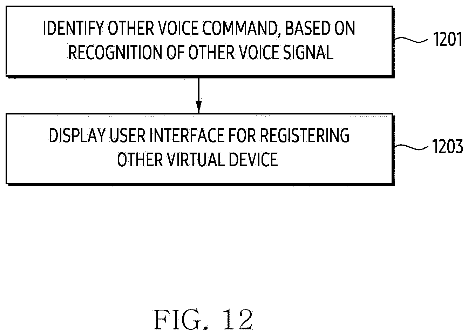

FIG. 12 is a flowchart illustrating an exemplary method of registering another virtual device based on another voice command. The method may be executed by the electronic device 101 of FIG. 1, the electronic device 101 of FIG. 2, or the processor 210 of FIG. 2. In the following example embodiment, each operation may be performed sequentially, but is not necessarily performed sequentially. For example, the order of each operation may be changed, and at least two operations may be performed in parallel.

In operation 1201, the processor 210 of FIG. 2 may identify another voice command indicating a display in another position distinct from positions of a plurality of devices including a virtual device (e.g., the virtual device 105 of FIG. 1), registered through the software application, based on a recognition of another voice signal obtained through a microphone (e.g., the microphone 230 of FIG. 2). For example, the processor 210 may obtain the voice signal corresponding to "Display an image in the kitchen" through the microphone 230. For example, the processor 210 may identify a device positioned in the "kitchen" that is a position indicated by the voice signal, among the devices registered using the software application. For example, the processor 210 may identify the other voice command based on the identification.

In operation 1203, the processor 210 may display a user interface of the software application for registering another virtual device distinct from the virtual device 105, positioned in the other position, based on the other voice command. For example, unlike the real device, since a virtual device may be positioned without restrictions, the processor 210 may display the user interface for registering the other virtual device. For example, the user interface may include text or a visual object for guiding the registration of the other virtual device. For example, a registration of the other virtual device may be provided more simply than the registration of the virtual device 105 illustrated through FIGS. 3 to 4B. For example, the registration of the other virtual device may be executed using device information of the virtual device 105 registered using the software application before the other virtual device is registered. However, it is not limited thereto.

As described above, the electronic device 101 may guide a registration of an available virtual device regardless of location, based on a recognition of the voice signal. For example, the electronic device 101 may provide an enhanced user experience through the guidance.

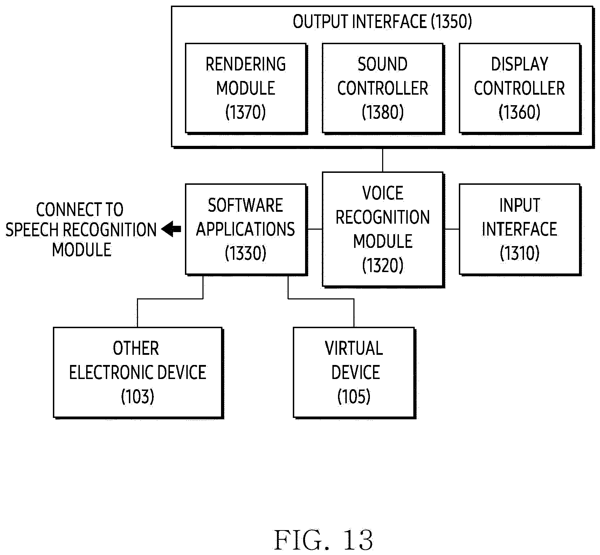

FIG. 13 illustrates an example of functional components executed by a processor of an MR device.

Referring to FIG. 13, a processor of a MR device (e.g., the MR device 102 of FIG. 1) may receive and identify user input, using an input interface (e.g., including various circuitry) 1310. For example, the user input may include a gaze input, a gesture input through a controller, and/or a voice input. For example, the processor of the MR device 102 may execute a function corresponding to the user input using the input interface 1310. Each of the modules described below with reference to FIG. 13 may include, for example, various processing circuitry and/or executable program instructions.

For example, the processor of the MR device 102 may recognize the user input using the voice recognition module 1320 when the user input is the voice input. For example, the processor of the MR device 102 may provide information on the user input identified through the input interface 1310 to the voice recognition module 1320. For example, the processor of the MR device 102 may recognize the user input, by executing natural language interpretation for the user input using the voice recognition module 1320.

For example, the processor of the MR device 102 may control another device through the MR device 102, using a software application 1330 that is a software application illustrated above. For example, the processor of the MR device 102 may register the virtual device 105 and the other electronic device 103 using the software application 1330. For example, the processor of the MR device 102 may set an image (or content) to be displayed through the virtual device 105 and other electronic device 103 using the software application 1330. For example, the software application 1330 may be executed based on information obtained from the external electronic device 104.

For example, the processor of the MR device 102 may control an image displayed on a display of the MR device 102 using an output interface 1350 and a sound output through a speaker of the MR device 102. For example, the output interface 1350 may include a display controller (e.g., including various circuitry) 1360, a rendering module 1370, and a sound controller (e.g., including various circuitry) 1380. For example, the processor of the MR device 102 may decode an image obtained from another device (e.g., the electronic device 101 and/or the other electronic device 103) for the virtual devices 105, using the display controller 1360. For example, the processor of the MR device 102 may encode an image displayed on a display of the virtual device 105, provided to another device (e.g., the electronic device 101 and/or the other electronic device 103) using the display controller 1360. However, it is not limited thereto.

For example, the processor of the MR device 102 may render an image on a space for MR or a virtual space using the rendering module 1370. For example, the processor of the MR device 102 may render an image obtained from the display controller 1360 using the rendering module 1370.

For example, the processor of the MR device 102 may control a sound output using the sound controller 1380, while the image is displayed. For example, the sound controller 1380 may execute encoding and/or decoding for the sound.

FIG. 14 is a block diagram illustrating an electronic device 1401 in a network environment 1400 according to various embodiments. Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to one embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element including a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In an embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

As described above, an electronic device according to an example embodiment may comprise: a microphone, a communication circuit, and a processor. According to an example embodiment, the processor may be configured to identify a voice command indicating display through a display of a virtual device registered using a software application for controlling another device through the electronic device, based on a recognition of a voice signal obtained through the microphone. According to an example embodiment, the processor may be configured to identify, based on the voice command, whether a mixed reality (MR) device configured to display the virtual device is worn. According to an example embodiment, the processor may be configured to obtain, in response to identifying that the MR device is worn, an image to be displayed on the display of the virtual device displayed through the MR device, based on device information registered using the software application as associated with the virtual device. According to an example embodiment, the processor may be configured to transmit, through the communication circuit to the MR device, a signal for displaying the image on the display of the virtual device displayed through the MR device.

According to an example embodiment, the processor may be configured to provide, in response to identifying that the MR device is not worn, a notification informing to wear the MR device.

According to an example embodiment, the processor may be configured to identify a display position, based on the recognition of the voice signal. According to an example embodiment, the processor may be configured to identify the voice command, based on identifying that the display position corresponds to a position of the virtual device registered using the software application as associated with the virtual device.

According to an example embodiment, the processor may be configured to identify the voice command further indicating that data for the image is obtained from another electronic device registered using the software application, based on the recognition of the voice signal. According to an example embodiment, the processor may be configured to, in response to identifying that the MR device is worn, request, based on the voice command, the data to the other electronic device through the communication circuit. According to an example embodiment, the processor may be configured to receive the data through the communication circuit from the other electronic device. According to an example embodiment, the processor may be configured to obtain the image based on the data and the device information.

According to an example embodiment, the image may correspond to another image displayed through a display of the other electronic device.

According to an example embodiment, the image may include an image extended from another image displayed through a display of the other electronic device.

According to an example embodiment, the processor may be configured to identify, based on the recognition of the voice signal, that the voice signal indicates a display through a display of another electronic device registered using the software application and the display through the display of the virtual device. According to an example embodiment, the processor may be configured to identify, based on identifying that a position of the electronic device identified through the communication circuit corresponds to, among a position of the virtual device registered using the software application as associated with the virtual device and a position of the other electronic device registered using the software application as associated with the other electronic device, the position of the virtual device.

The electronic device according to an example embodiment may further comprise a display. According to an example embodiment, the processor may be configured to identify the voice command, based on the recognition of the voice signal obtained while executing a display on the display of the electronic device based on first data received through the communication circuit from an external electronic device. According to an example embodiment, the processor may be configured to transmit the device information to the external electronic device through the communication circuit, in response to identifying that the MR device is worn. According to an example embodiment, the processor may be configured to obtain the image by receiving second data obtained based on the device information through the communication circuit from the external electronic device.

According to an example embodiment, the processor may be configured to identify, based on recognition of the voice signal, that the voice signal indicates the display through the display of the virtual device and a display through a display of another electronic device registered using the software application. According to an example embodiment, the processor may be configured to identify that a position of the other electronic device registered using the software application as associated with the other electronic device and a position of the virtual device registered using the software application as associated with the virtual device are included in a region. According to an example embodiment, the processor may be configured to identify a direction of the display of the other electronic device based on the position of the other electronic device based on identifying that the position of the other electronic device and the position of the virtual device are included in the region, and identify a direction of the display of the virtual device based on the position of the virtual device. According to an example embodiment, the processor may be configured to identify the voice command, based on the direction of the display of the other electronic device and the direction of the display of the virtual device.

According to an example embodiment, the processor may be configured to receive a signal indicating a state of the MR device, through the communication circuit from the MR device connected to the electronic device. According to an example embodiment, the processor may be configured to identify whether the MR device is worn, based on the received signal.

According to an example embodiment, the signal indicating the state of the MR device may include information, indicating a movement of the MR device, obtained through a sensor of the MR device.

According to example an embodiment, the signal indicating the state of the MR device may include information, indicating a distance between the MR device and an external electronic device, obtained through a sensor of the MR device.

According to an example embodiment, the processor may be configured to identify, while a connection with the MR device is released, another image to be displayed through the display of the virtual device positioned in a virtual space that is accessible using the MR device, using the software application. According to an example embodiment, the processor may be configured to transmit, while the connection with the MR device is released, data for displaying the other image on the display of the virtual device through the communication circuit to an external electronic device providing the virtual space.

According to an example embodiment, the processor may be configured to identify, based on a recognition of another voice command obtained through the microphone, another voice command indicating a display in another position distinct from positions of a plurality of devices that include the virtual device, the plurality of device registered through the software application. According to an example embodiment, the processor may be configured to display a user interface of the software application for registering another virtual device positioned at the other position on the display of the electronic device, based on the other voice command.

According to an example embodiment, the processor may be configured to obtain device information of the other virtual device, through the user interface. According to an example embodiment, the processor may be configured to register, using the software application, the other virtual device associated with the device information and the other position.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a microphone;
a communication circuit; and
a processor configured to:
identify a voice command that indicates display through a display of a virtual device registered by using a software application for controlling another device through the electronic device, based on a recognition of a voice signal obtained through the microphone;
identify, based on the voice command, whether a mixed reality (MR) device for displaying the virtual device is worn;
obtain, in response to identifying that the MR device is worn, an image to be displayed on the display of the virtual device that is displayed through the MR device, based on device information registered by using the software application as associated with the virtual device; and
transmit, through the communication circuit to the MR device, a signal for displaying the image on the display of the virtual device displayed through the MR device.

2. The electronic device of claim 1, wherein the processor is configured to provide, in response to identifying that the MR device is not worn, a notification for informing to wear the MR device.

3. The electronic device of claim 1, wherein the processor is configured to:
identify a display position, based on the recognition of the voice signal; and
identify the voice command, based on identifying that the display position corresponds to a position of the virtual device registered by using the software application as associated with the virtual device.

4. The electronic device of claim 1, wherein the processor is configured to:
identify the voice command further indicating that data for the image is obtained from another electronic device registered by using the software application, based on the recognition of the voice signal;
in response to identifying that the MR device is worn, request, based on the voice command, the data to the other electronic device through the communication circuit;
receive the data through the communication circuit from the other electronic device; and
obtain the image based on the data and the device information.

5. The electronic device of claim 4, wherein the image corresponds to another image displayed through a display of the other electronic device.

6. The electronic device of claim 4, wherein the image is an image extended from another image displayed through a display of the other electronic device.

7. The electronic device of claim 1, wherein the processor is configured to:
identify, based on the recognition of the voice signal, that the voice signal indicates a display through a display of another electronic device registered by using the software application and the display through the display of the virtual device; and
identify, based on identifying that a position of the electronic device identified through the communication circuit corresponds to, among a position of the virtual device registered by using the software application as associated with the virtual device and a position of the other electronic device registered by using the software application as associated with the other electronic device, the position of the virtual device.

8. The electronic device of claim 1, further comprising:
a display,
wherein the processor is configured to:
identify the voice command, based on the recognition of the voice signal obtained while executing a display on the display of the electronic device based on first data received through the communication circuit from an external electronic device;
transmit the device information to the external electronic device through the communication circuit, in response to identifying that the MR device is worn; and
obtain the image by receiving second data obtained based on the device information through the communication circuit from the external electronic device.

9. The electronic device of claim 1, wherein the processor is configured to:
identify, based on the recognition of the voice signal, that the voice signal indicates the display through the display of the virtual device and a display through a display of another electronic device registered by using the software application;
identify that a position of the other electronic device registered by using the software application as associated with the other electronic device and a position of the virtual device registered by using the software application as associated with the virtual device are included in a region;
based on identifying that the position of the other electronic device and the position of the virtual device are included in the region, identify a direction of the display of the other electronic device based on the position of the other electronic device and identify a direction of the display of the virtual device based on the position of the virtual device; and
identify the voice command, based on the direction of the display of the other electronic device and the direction of the display of the virtual device.

10. The electronic device of claim 1, wherein the processor is configured to:
receive a signal indicating a state of the MR device, through the communication circuit from the MR device connected to the electronic device; and
identify whether the MR device is worn, based on the received signal.

11. The electronic device of claim 10, wherein the signal indicating the state of the MR device includes information, indicating a movement of the MR device, obtained through a sensor of the MR device.

12. The electronic device of claim 10, wherein the signal indicating the state of the MR device includes information, indicating a distance between the MR device and an external electronic device, obtained through a sensor of the MR device.

13. The electronic device of claim 1, wherein the processor is further configured to:
identify, while a connection with the MR device is released, another image to be displayed through the display of the virtual device positioned in a virtual space that is accessible by using the MR device, by using the software application; and
transmit, while the connection with the MR device is released, data for displaying the other image on the display of the virtual device through the communication circuit to an external electronic device providing the virtual space.

14. The electronic device of claim 1, further comprising:
a display,
wherein the processor is further configured to:
identify, based on a recognition of another voice command obtained through the microphone, another voice command indicating a display in another position distinct from positions of a plurality of devices that include the virtual device, the plurality of device registered through the software application; and
based on the other voice command, display, on the display of the electronic device, a user interface of the software application for registering another virtual device positioned at the other position.

15. A method executed in an electronic device including a microphone and a communication circuit, the method comprising:
identifying a voice command that indicates display through a display of a virtual device registered by using a software application for controlling another device through the electronic device, based on a recognition of a voice signal obtained through the microphone;
identifying, based on the voice command, whether a mixed reality (MR) device for displaying the virtual device is worn;
obtaining, in response to identifying that the MR device is worn, an image to be displayed on the display of the virtual device that is displayed through the MR device, based on device information registered by using the software application as associated with the virtual device; and
transmitting, through the communication circuit to the MR device, a signal for displaying the image on the display of the virtual device displayed through the MR device.
